(19) **Europäisches Patentamt**
**European Patent Office**
**Office européen des brevets**

(11) **EP 4 644 119 A1**

(12) **EUROPEAN PATENT APPLICATION**

(43) Date of publication:
**05.11.2025 Bulletin 2025/45**

(21) Application number: **24173552.1**

(22) Date of filing: **30.04.2024**

(51) International Patent Classification (IPC):
**B32B 27/08** (2006.01)   **B29C 48/00** (2019.01)
**B32B 27/18** (2006.01)   **B32B 27/20** (2006.01)
**B32B 27/30** (2006.01)   **B32B 27/32** (2006.01)
**C08J 5/18** (2006.01)   **C08L 23/04** (2006.01)

(52) Cooperative Patent Classification (CPC):
**C08L 23/04; B29C 48/0022; B29C 48/08;
B29C 48/10; B29C 48/21; B29C 48/49;
B29C 48/495; B29C 48/92; B32B 27/08;
B32B 27/18; B32B 27/20; B32B 27/30;
B32B 27/32; C08J 5/18;** B32B 2250/02;   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **YALALOV, Denis**
**444 86 Stenungsund (SE)**
• **BROEDERS, Bert**
**3583 Beringen (BE)**
• **SCHÜTZ, Florian**
**1020 Vienna (AT)**

(74) Representative: **Maiwald GmbH**
**Elisenhof**
**Elisenstraße 3**
**80335 München (DE)**

(54) **MULTILAYER INSULATING FILMS FOR ELECTRICAL DEVICES**

(57)   A film that comprises, in the given order, the following layers:

a) one or more first layer(s) (A) comprising a polyolefin composition (PCI) comprising:

i) a polypropylene (PP1); and

ii) an ethylene polymer (PE1) comprising monomer units of ethylene and one or more polar comonomer units selected from the group consisting of $(C_1-C_6)$-alkyl acrylate and $(C_1-C_6)$-alkyl $(C_1-C_6)$-alkylacrylate comonomer units,

b) a second layer (B) comprising a polyethylene composition (PC2),

wherein a surface of the second layer (B) is in adherent contact with a surface of one of the first layer(s) (A).

EP 4 644 119 A1

**(Cont. next page)**

(52) Cooperative Patent Classification (CPC): (Cont.)
B32B 2250/24; B32B 2250/242; B32B 2264/00;
B32B 2264/10; B32B 2264/102; B32B 2264/104;
B32B 2307/30; B32B 2307/306; B32B 2307/3065;
B32B 2307/308; B32B 2307/7376; B32B 2307/748;
B32B 2457/00; B32B 2457/04; B32B 2553/00;
B32B 2571/00

## Description

### Field of the Invention

The present invention is directed to a film comprising at least two layers, wherein a first layer comprises a composition comprising a polypropylene and an ethylene polymer comprising monomer units of ethylene and one or more polar comonomer units selected from the group consisting of $(C_1\text{-}C_6)$-alkyl acrylate and $(C_1\text{-}C_6)$-alkyl $(C_1\text{-}C_6)$-alkylacrylate comonomer units and a second layer, in adherent contact with the first layer, comprising a polyethylene composition, an article comprising an electrical device and one or more of said films, and a use of the film as an insulating film for an electrical device.

### Background to the Invention

The performance of electrical devices is often limited by the properties of the materials used as insulators. Insulators must function in extreme conditions, including high temperatures and strong electric fields. As such, excellent electrical, thermal and mechanical properties are required, as well as a good resistance to environmental stress. Furthermore, the ability to protect the electrical device from moisture is also critical.

Polypropylene is known to have excellent mechanical and electrical properties, as well as being water resistant and has excellent resistance to environmental stress; however, the application of polypropylene in insulating films for electrical devices is limited by a number of factors. Since it is generally not possible to achieve the beneficial mechanical properties whilst also providing a soft composition that prevents damage to the electrical device (either whilst applying the film or during operation of the device), multilayer films are often employed, having a polypropylene outer layer and a softer inner layer (such as a polar ethylene copolymer layer).

Whilst such films offer excellent insulation properties, it remains a challenge to ensure that the multilayer film has good adhesion to the electrical devices, as well as between the individual layers of the multilayer film. It is especially critical to achieve improved adhesion between the individual layers of the multilayer film without sacrificing other properties of the multilayer film, such as thermal properties and flame retardance.

### Summary of the Invention

The present invention is based on the finding that the addition of an ethylene acrylate/alkylacrylate copolymer to the outer polypropylene layer can improve the adhesion of the outer layer to the inner polyethylene layer in multilayer films for insulating electrical devices.

In a first aspect, the present invention is directed to a film that comprises, in the given order, the following layers:

a) one or more first layer(s) (A) comprising a polyolefin composition (PC1) comprising:

i) a polypropylene (PP1); and
ii) an ethylene polymer (PE1) comprising monomer units of ethylene and one or more polar comonomer units selected from the group consisting of $(C_1\text{-}C_6)$-alkyl acrylate and $(C_1\text{-}C_6)$-alkyl $(C_1\text{-}C_6)$-alkylacrylate comonomer units,

b) a second layer (B) comprising a polyethylene composition (PC2),

wherein a surface of the second layer (B) is in adherent contact with a surface of one of the first layer(s) (A).

In a second aspect, the present invention is directed to a process for producing the film of the first aspect, comprising the following steps:

a) providing the polyolefin composition (PC1) and the polyethylene composition (PC2);
b) co-extruding one or more layers comprising the polyolefin composition (PC1) and at least one layer comprising the polyethylene composition (PC2), thereby obtaining the film according to any one of the preceding claims.

In a third aspect, the present invention is directed to an article comprising the given layers in the following order:

a) a first insulating film (F1);
b) an electrical device (D); and
c) a second insulating film (F2),

wherein the electrical device (D) has a first surface and a second surface located opposite the first surface, wherein the first surface of the electrical device (D) is in adherent contact with a surface of the first insulating film (F 1) and the second surface of the electrical device (D) is in adherent contact with a surface of the second insulating film (F2), resulting in a layer structure F1-D-F2 having the electrical device (D) disposed between the first insulating film (F1) and the second insulating film (F2);

wherein at least one of the first insulating film (F1) and the second insulating film (F2), preferably both the first insulating film (F1) and the second insulating film (F2), is/are films according to the first aspect,

wherein, if the first insulating film (F1) is a film according to the first aspect, the electrical device is in adherent contact with the second layer (B) of the first insulating film (F 1), and wherein, if the second insulating film (F2) is a film according to the first aspect, the electrical device is in adherent contact with the second layer (B) of the second insulating film (F2).

In a final aspect, the present invention is directed to a use of the film of the first aspect as an insulating film for an electrical device.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a", "an", and the like refers to one or more.

In the following amounts are given in % by weight (wt.-%) unless it is stated otherwise.

A propylene homopolymer is a polymer that essentially consists of propylene monomer units. Due to impurities especially during commercial polymerization processes, a propylene homopolymer can comprise up to 0.1 mol-% comonomer units, preferably up to 0.05 mol-% comonomer units and most preferably up to 0.01 mol-% comonomer units.

A propylene random copolymer is a copolymer of propylene monomer units and comonomer units, preferably selected from ethylene and $C_4$-$C_8$ alpha-olefins, in which the comonomer units are distributed randomly over the polymeric chain. The propylene random copolymer can comprise comonomer units from one or more comonomers different in their amounts of carbon atoms.

Heterophasic propylene copolymers typically comprise:

a) a crystalline propylene homopolymer or copolymer matrix (M); and

b) an elastomeric rubber, preferably a propylene-ethylene copolymer (E).

In case of a random heterophasic propylene copolymer, said crystalline matrix phase is a random copolymer of propylene and at least one alpha-olefin comonomer.

The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a monophasic propylene copolymer in that it shows two distinct glass transition temperatures Tg which are attributed to the matrix phase and the elastomeric phase.

In the following, the term "polypropylene" means any polymer that is propylene-based (i.e. at least 50 mol-% of propylene monomers). The term "polyethylene means any polymer that is ethylene-based (i.e. at least 50 mol-% of ethylene monomers. The term "polypropylene composition" refers to a composition that predominantly contains (i.e. at least 50 wt.-%) polypropylene. The term "polyethylene composition" refers to a composition that predominantly contains (i.e. at least 50 wt.-%) polyethylene.

The present invention will now be described in more detail.

## Detailed Description

### Film

The film of the first aspect comprises, in the given order, the following layers:

a) one or more first layer(s) (A) comprising a polyolefin composition (PC1);
b) a second layer (B) comprising a polyethylene composition (PC2).

It is preferred that the peel force between the polyolefin composition (PC1) and the polyethylene composition (PC2), determined according to the method given in the determination methods, is in the range from 10 to 50 N/cm, more preferably in the range from 12 to 40 N/cm, most preferably in the range from 15 to 30 N/cm.

The surface of the second layer (B) is in adherent contact with a surface of one of the one or more first layer(s) (A).

It is preferred that the one or more first layers(s) (A) and the second layer (B) are co-extruded layers, in other words they have been formed in a co-extrusion process. The co-extrusion process differs from a lamination process, in which the layers are individually extruded, before being joined together under pressure (i.e. lamination conditions). As would be understood by the person skilled in the art, layers formed via co-extrusion can be distinguished from layers formed by lamination by a number of key observations, including, but not limited to, the morphology of the polymers at the interface, the propensity for laminated films to undergo delamination and the mechanical properties of the resultant films.

The requirement that the one or more first layer(s) (A) and the second layer (B) are co-extruded layers means that these layers have necessarily been formed in the same co-extrusion process. A process wherein two first layers (A) are formed by co-extrusion, second layer (B) and a further layer (C) are formed by co-extrusion, and then the two co-extruded multilayers films subsequently laminated to form a A/A/B/C film would not meet the requirements that the one or more first layers(s) (A) and the second layer (B) are co-extruded layers, within the meaning of the present invention.

It is particularly preferred that no further layers are present, in other words, the film consists of the one or more first layer(s) (A) and the second layer (B), which are in adherent contact and preferably formed via co-extrusion, i.e. are co-extruded layers.

The total thickness of the film is preferably in the range from 60 to 1500 $\mu$m, more preferably in the range from 70 to 1250 $\mu$m, most preferably in the range from 80 to 850 $\mu$m.

The combined thickness of the one or more first layer(s) (A) is preferably in the range from 30 to 1000 $\mu$m, more preferably in the range from 80 to 800 $\mu$m, most preferably in the range from 100 to 450 $\mu$m.

The thickness of the second layer (B) is preferably in the range from 10 to 750 $\mu$m, more preferably in the range from 15 to 650 $\mu$m, most preferably in the range from 20 to 550 $\mu$m.

**Polyolefin composition (PC1)**

The polyolefin composition (PC1) of the first layer comprises:

i) a polypropylene (PP1); and
ii) an ethylene polymer (PE1).

It is preferred that the polyolefin composition (PC1) further comprises one or more flame retardants (FR).

At least one of these one or more flame retardants comprises an inorganic phosphorus compound, preferably an inorganic phosphinate salt.

If present, the one or more flame retardants (FR) are preferably present in an amount in the range from 0.0 to 15.0 wt.-%, more preferably from 2.0 to 12.0 wt.-%, most preferably from 5.0 to 10.0 wt.-%, relative to the total weight of the polyolefin composition (PC1).

It is also preferred that the polyolefin composition (PC1) further comprises one or more pigments (P).

It is preferred that the one or more pigments is an inorganic pigment, more preferably a white inorganic pigment, most preferably titanium dioxide.

The titanium dioxide is preferably in a form of rutile. Rutile is a mineral that is primarily based on titanium dioxide and has a tetragonal unit cell structure as well known in the art.

If present, the one or more pigments are preferably present in an amount in the range from 0.0 to 15.0 wt.-%, more preferably from 1.0 to 10.0 wt.-%, most preferably from 3.0 to 7.0 wt.-%, relative to the total weight of the polyolefin composition (PC1).

Another optional component of the polyolefin composition (PC1) is one or more further additives (A1) other than flame retardants and pigments.

If present, the one or more further additives (A1) are provided in an amount in the range from 0.0 to 5.0 wt.-%, relative to the total weight of the polyolefin composition (PC1).

The selection of suitable additives for the polyolefin composition (PC1) is within the general knowledge of the person skilled in the art.

For example, the one or more further additives (A1) may be selected from the group consisting of antioxidants, stabilizers, fillers, nucleating agents, and antistatic agents.

Such additives are generally commercially available and are described, for example, in "Plastic Additives Handbook", pages 871 to 873, 5th edition, 2001 of Hans Zweifel.

It is understood that the content of additives (A1), given with respect to the total weight of the polyolefin composition (PC1), includes any carrier polymers used to introduce the additives to said polyolefin composition (PC1), i.e.

masterbatch carrier polymers. An example of such a carrier polymer would be a polypropylene homopolymer in the form of powder.

The content of additives (A1) given with respect to the total weight of the polyolefin composition (PC1), also includes any carrier polymers used to introduce the one or more pigments to said polyolefin composition (PC1), i.e. masterbatch carrier polymers.

Any pigments present in the polyolefin composition do not count towards the content of one or more further additives, rather these are present as the one or more pigments (P), as described above.

It is preferred that the polyolefin composition (PC1) comprises, more preferably consists of:

a) an amount in the range from 40.0 to 90.0 wt.-%, more preferably from 50.0 to 87.0 wt.-%, most preferably from 60.0 to 85.0 wt.-%, relative to the total weight of the polyolefin composition (PC1), of the polypropylene (PP1), more preferably the heterophasic propylene-ethylene copolymer (HECO1);

b) an amount in the range from 10.0 to 35.0 wt.-%, more preferably from 13.0 to 30.0 wt.-%, most preferably from 15.0 to 25.0 wt.-%, relative to the total weight of the polyolefin composition (PC1), of the ethylene polymer (PE1);

c) optionally, an amount in the range from 0.0 to 15.0 wt.-%, more preferably from 2.0 to 12.0 wt.-%, most preferably from 5.0 to 10.0 wt.-%, relative to the total weight of the polyolefin composition (PC1), of the one or more flame retardants (FR);

d) optionally, an amount in the range from 0.0 to 15.0 wt.-%, more preferably from 1.0 to 10.0 wt.-%, most preferably from 3.0 to 7.0 wt.-%, relative to the total weight of the polyolefin composition (PC1), of the one or more pigments (P); and

e) optionally, an amount in the range from 0.0 to 5.0 wt.-%, relative to the total weight of the polyolefin composition (PC1), of one or more additives (A1) other than flame retardants and pigments.

In one embodiment, the polyolefin composition (PC1) comprises, more preferably consists of:

a) an amount in the range from 40.0 to 90.0 wt.-%, relative to the total weight of the polyolefin composition (PC1), of the polypropylene (PP1), more preferably the heterophasic propylene-ethylene copolymer (HECO1);

b) an amount in the range from 10.0 to 35.0 wt.-%, relative to the total weight of the polyolefin composition (PC1), of the ethylene polymer (PE1);

c) optionally, an amount in the range from 0.0 to 15.0 wt.-%, relative to the total weight of the polyolefin composition (PC1), of the one or more flame retardants (FR);

d) optionally, an amount in the range from 0.0 to 15.0 wt.-%, relative to the total weight of the polyolefin composition (PC1), of the one or more pigments (P); and

e) optionally, an amount in the range from 0.0 to 5.0 wt.-%, relative to the total weight of the polyolefin composition (PC1), of one or more additives (A1) other than flame retardants and pigments.

In another embodiment, the polyolefin composition (PC1) comprises, more preferably consists of:

a) an amount in the range from 50.0 to 87.0 wt.-%, relative to the total weight of the polyolefin composition (PC1), of the polypropylene (PP1), more preferably the heterophasic propylene-ethylene copolymer (HECO1);

b) an amount in the range from 13.0 to 30.0 wt.-%, relative to the total weight of the polyolefin composition (PC1), of the ethylene polymer (PE1);

c) optionally, an amount in the range from 2.0 to 12.0 wt.-%, relative to the total weight of the polyolefin composition (PC1), of the one or more flame retardants (FR);

d) optionally, an amount in the range from 1.0 to 10.0 wt.-%, relative to the total weight of the polyolefin composition (PC1), of the one or more pigments (P); and

e) optionally, an amount in the range from 0.0 to 5.0 wt.-%, relative to the total weight of the polyolefin composition (PC1), of one or more additives (A1) other than flame retardants and pigments.

In yet another embodiment, the polyolefin composition (PC1) comprises, more preferably consists of:

a) an amount in the range from 60.0 to 85.0 wt.-%, relative to the total weight of the polyolefin composition (PC1), of the polypropylene (PP1), more preferably the heterophasic propylene-ethylene copolymer (HECO1);

b) an amount in the range from 15.0 to 25.0 wt.-%, relative to the total weight of the polyolefin composition (PC1), of the ethylene polymer (PE1);

c) optionally, an amount in the range from 5.0 to 10.0 wt.-%, relative to the total weight of the polyolefin composition (PC1), of the one or more flame retardants (FR);

d) optionally, an amount in the range from 3.0 to 7.0 wt.-%, relative to the total weight of the polyolefin composition (PC1), of the one or more pigments (P); and

e) optionally, an amount in the range from 0.0 to 5.0 wt.-%, relative to the total weight of the polyolefin composition (PC1), of one or more additives (A1) other than flame retardants and pigments.

It is preferred that the polyolefin composition (PC1) consists of the polypropylene (PP1), the ethylene polymer (PE1), the one or more optional flame retardants (FR), the one or more optional pigments (P), and the one or more optional additives (A1).

In one embodiment, the polyolefin composition (PC1) consists of the polypropylene (PP1), the ethylene polymer (PE1), and the one or more optional additives (A1).

In this embodiment, the polyolefin composition (PC1) consists of:

a) an amount in the range from 40.0 to 90.0 wt.-%, more preferably from 50.0 to 87.0 wt.-%, most preferably from 60.0 to 85.0 wt.-%, relative to the total weight of the polyolefin composition (PC1), of the polypropylene (PP1), more preferably the heterophasic propylene-ethylene copolymer (HECO1);

b) an amount in the range from 10.0 to 35.0 wt.-%, more preferably from 13.0 to 30.0 wt.-%, most preferably from 15.0 to 25.0 wt.-%, relative to the total weight of the polyolefin composition (PC1), of the ethylene polymer (PE1);

c) optionally, an amount in the range from 0.0 to 5.0 wt.-%, relative to the total weight of the polyolefin composition (PC1), of one or more additives (A1) other than flame retardants and pigments.

In another embodiment, the polyolefin composition (PC1) consists of the polypropylene (PP1), the ethylene polymer (PE1), the one or more optional flame retardants (FR), and the one or more optional additives (A1).

a) an amount in the range from 40.0 to 90.0 wt.-%, more preferably from 50.0 to 85.0 wt.-%, most preferably from 60.0 to 80.0 wt.-%, relative to the total weight of the polyolefin composition (PC1), of the polypropylene (PP1), more preferably the heterophasic propylene-ethylene copolymer (HECO1);

b) an amount in the range from 10.0 to 35.0 wt.-%, more preferably from 13.0 to 30.0 wt.-%, most preferably from 15.0 to 25.0 wt.-%, relative to the total weight of the polyolefin composition (PC1), of the ethylene polymer (PE1);

c) an amount in the range from 0.0 to 15.0 wt.-%, more preferably from 2.0 to 12.0 wt.-%, most preferably from 5.0 to 10.0 wt.-%, relative to the total weight of the polyolefin composition (PC1), of the one or more flame retardants (FR);

d) optionally, an amount in the range from 0.0 to 5.0 wt.-%, relative to the total weight of the polyolefin composition (PC1), of one or more additives (A1) other than flame retardants and pigments.

In a further embodiment, the polyolefin composition (PC1) consists of the polypropylene (PP1), the ethylene polymer (PE1), the one or more pigments (P), and the one or more optional additives (A1).

a) an amount in the range from 40.0 to 90.0 wt.-%, more preferably from 50.0 to 86.0 wt.-%, most preferably from 60.0 to 82.0 wt.-%, relative to the total weight of the polyolefin composition (PC1), of the polypropylene (PP1), more preferably the heterophasic propylene-ethylene copolymer (HECO1);

b) an amount in the range from 10.0 to 35.0 wt.-%, more preferably from 13.0 to 30.0 wt.-%, most preferably from 15.0 to 25.0 wt.-%, relative to the total weight of the polyolefin composition (PC1), of the ethylene polymer (PE1);

c) an amount in the range from 0.0 to 15.0 wt.-%, more preferably from 1.0 to 10.0 wt.-%, most preferably from 3.0 to 7.0 wt.-%, relative to the total weight of the polyolefin composition (PC1), of the one or more pigments (P); and

d) optionally, an amount in the range from 0.0 to 5.0 wt.-%, relative to the total weight of the polyolefin composition (PC1), of one or more additives (A1) other than flame retardants and pigments.

In yet another embodiment, the polyolefin composition (PC1) consists of the polypropylene (PP1), the ethylene polymer (PE1), the one or more flame retardants (FR), the one or more pigments (P), and the one or more optional additives (A1).

a) an amount in the range from 40.0 to 90.0 wt.-%, more preferably from 50.0 to 84.0 wt.-%, most preferably from 60.0 to 78.0 wt.-%, relative to the total weight of the polyolefin composition (PC1), of the polypropylene (PP1), more preferably the heterophasic propylene-ethylene copolymer (HECO1);

b) an amount in the range from 10.0 to 35.0 wt.-%, more preferably from 13.0 to 30.0 wt.-%, most preferably from 15.0 to 25.0 wt.-%, relative to the total weight of the polyolefin composition (PC1), of the ethylene polymer (PE1);

c) an amount in the range from 0.0 to 15.0 wt.-%, more preferably from 2.0 to 12.0 wt.-%, most preferably from 5.0 to 10.0 wt.-%, relative to the total weight of the polyolefin composition (PC1), of the one or more flame retardants (FR);

d) an amount in the range from 0.0 to 15.0 wt.-%, more preferably from 1.0 to 10.0 wt.-%, most preferably from 3.0 to 7.0 wt.-%, relative to the total weight of the polyolefin composition (PC1), of the one or more pigments (P); and

e) optionally, an amount in the range from 0.0 to 5.0 wt.-%, relative to the total weight of the polyolefin composition (PC1), of one or more additives (A1) other than flame retardants and pigments.

It is preferred that the polyolefin composition (PC1) has a flame retardance of VTM-0, when determined according to the UL94 test method on 300 µm cast film specimens.

Polypropylene (PP1)

In the broadest sense, the polypropylene (PP1) may be any polypropylene.

It is however preferred that the polypropylene (PP1) is a propylene-ethylene copolymer. It is especially preferred that the polypropylene (PP1) is a heterophasic propylene-ethylene copolymer (HECO1).

The heterophasic propylene-ethylene copolymer (HECO1) comprises:

i) a crystalline matrix (M1) being a propylene homopolymer or propylene-ethylene copolymer, most preferably a propylene homopolymer; and
ii) an amorphous propylene-ethylene elastomer (E1) that is dispersed in said crystalline matrix (M1).

It is preferred that the crystalline matrix (M1) is free from 2,1-regiodefects, as determined by quantitative $^{13}$C-NMR spectroscopic analysis. This is an indication that the heterophasic propylene-ethylene copolymer (HECO1) has been polymerized in the presence of a Ziegler-Natta catalyst. As such, it is also preferred that the heterophasic propylene-ethylene copolymer (HECO1) has been polymerized in the presence of a Ziegler-Natta catalyst.

The melt flow rate ($MFR_2$), determined according to ISO 1133 at 230 °C and 2.16 kg, of the polypropylene (PP1), more preferably the propylene-ethylene copolymer, most preferably the heterophasic propylene-ethylene copolymer (HECO1), is preferably in the range from 0.05 to 10.0 g/10 min, more preferably in the range from 0.10 to 5.0 g/10 min, most preferably in the range from 0.15 to 1.00 g/10 min.

The melting temperature ($T_m$), determined according to ISO 11357/part3/method C2, of the polypropylene (PP1), more preferably the propylene-ethylene copolymer, most preferably the heterophasic propylene-ethylene copolymer (HECO1), is preferably in the range from 155 to 172 °C, more preferably in the range from 158 to 167 °C, most preferably in the range from 160 to 165 °C.

The crystallization temperature ($T_c$), determined according to ISO 11357/part3/method C2, of the polypropylene (PP1), more preferably the propylene-ethylene copolymer, most preferably the heterophasic propylene-ethylene copolymer (HECO1), is preferably in the range from 110 to 125 °C, more preferably in the range from 113 to 122 °C, most preferably in the range from 115 to 120 °C.

The heterophasic propylene-ethylene copolymer (HECO1) may be characterized according to the CRYSTEX QC method using trichlorobenzene (TCB) as a solvent. This method is described below in the determination methods section. The crystalline fraction (CF) contains for the most part the matrix phase and only a small part of the elastomeric phase and the soluble fraction (SF) contains for the most part the elastomeric phase and only a small part of the matrix phase. In some cases, this method results in more useful data (than for example xylene cold soluble-based methods), since the crystalline fraction (CF) and the soluble fraction (SF) more accurately correspond to the matrix and elastomeric phases respectively. Due to the differences in the separation methods of xylene extraction and CRYSTEX QC method the properties of XCS/XCI fractions on the one hand and crystalline/soluble (CF/SF) fractions on the other hand are not exactly the same, meaning that the amounts of matrix phase and elastomeric phase can differ as well as the properties.

The heterophasic propylene-ethylene copolymer (HECO1) preferably has an ethylene content (C2(total)), determined by CRYSTEX QC analysis, in the range from 5.0 to 12.0 wt.-%, more preferably in the range from 6.0 to 11.0 wt.-%, most preferably in the range from 7.0 to 10.0 wt.-%.

The heterophasic propylene-ethylene copolymer (HECO1) preferably has a soluble fraction (SF) content, determined by CRYSTEX QC analysis, in the range from 8.0 to 20.0 wt.-%, more preferably in the range from 10.0 to 17.0 wt.-%, most preferably in the range from 12.0 to 15.0 wt.-%.

The heterophasic propylene-ethylene copolymer (HECO1) preferably has an ethylene content of the soluble fraction (C2(SF)), determined by CRYSTEX QC analysis, in the range from 30.0 to 60.0 wt.-%, more preferably in the range from 35.0 to 55.0 wt.-%, most preferably in the range from 40.0 to 50.0 wt.-%.

The heterophasic propylene-ethylene copolymer (HECO1) preferably has an intrinsic viscosity of the soluble fraction (iV(SF)), determined by CRYSTEX QC analysis, in the range from 2.20 to 5.20 dL/g, more preferably in the range from 2.70 to 4.70 dL/g, most preferably in the range from 3.20 to 4.20 dL/g.

The heterophasic propylene-ethylene copolymer (HECO1) preferably has a crystalline fraction (CF) content, determined by CRYSTEX QC analysis, in the range from 80.0 to 92.0 wt.-%, more preferably in the range from 83.0 to 90.0 wt.-%, most preferably in the range from 85.0 to 88.0 wt.-%.

The heterophasic propylene-ethylene copolymer (HECO1) preferably has an ethylene content of the crystalline fraction (C2(CF)), determined by CRYSTEX QC analysis, in the range from 2.0 to 7.0 wt.-%, more preferably in the range from 2.5 to 5.5 wt.-%, most preferably in the range from 3.0 to 5.0 wt.-%.

The heterophasic propylene-ethylene copolymer (HECO1) preferably has an intrinsic viscosity of the crystalline fraction (iV(CF)), determined by CRYSTEX QC analysis, in the range from 2.50 to 5.50 dL/g, more preferably in the range from 3.00 to 5.00 dL/g, most preferably in the range from 3.50 to 4.50 dL/g.

The heterophasic propylene-ethylene copolymer (HECO1) preferably has an intrinsic viscosity (iV(total)), determined by CRYSTEX QC analysis, in the range from 2.50 to 5.50 dL/g, more preferably in the range from 3.00 to 5.00 dL/g, most preferably in the range from 3.50 to 4.50 dL/g.

Ethylene polymer (PE1)

The ethylene polymer (PE1) comprises, more preferably consists of, monomer units of ethylene and one or more polar comonomer units selected from the group consisting of $(C_1-C_6)$-alkyl acrylate and $(C_1-C_6)$-alkyl $(C_1-C_6)$-alkylacrylate comonomer units.

The ethylene polymer (PE1) preferably comprises, more preferably consists of, monomer units of ethylene and polar comonomer units selected from one or more of $(C_2-C_6)$-alkyl acrylate or $(C_2-C_6)$-alkyl $(C_1-C_4)$-alkylacrylate comonomer units.

The ethylene polymer (PE1) more preferably comprises, more preferably consists of, monomer units of ethylene and polar comonomer units selected from one or more of $(C_3-C_5)$-alkyl acrylate or $(C_3-C_5)$-alkyl $(C_1-C_2)$-alkylacrylate comonomer units.

In one embodiment, the ethylene polymer (PE1) comprises, more preferably consists of monomer units of ethylene and polar comonomer units selected from one or more $(C_1-C_6)$-alkyl acrylate comonomer units.

In this embodiment, at least one of the one or more $(C_1-C_6)$-alkyl acrylate comonomer units is a $(C_2-C_6)$-alkyl acrylate comonomer unit, more preferably is a $(C_3-C_5)$-alkyl acrylate comonomer unit, most preferably is a butyl acrylate comonomer unit.

The comonomer units are preferably selected from methyl acrylate, ethylene acrylate, n-propyl acrylate and n-butyl acrylate or n-pentyl acrylate, most preferably the ethylene polymer (PE1) is an ethylene n-butyl acrylate copolymer (EBA).

It is particularly preferred that the ethylene polymer (PE1) comprises, more preferably consists of, monomer units of ethylene and n-butyl acrylate.

It is preferred that the ethylene polymer (PE1), more preferably the ethylene n-butyl acrylate copolymer (EBA), has a density, determined according to ISO 1183-187, in the range from 910 to 940 kg/m$^3$, more preferably in the range from 916 to 933 kg/m$^3$, most preferably in the range from 922 to 927 kg/m$^3$.

It is preferred that the ethylene polymer (PE1), more preferably the ethylene n-butyl acrylate copolymer (EBA), has a melt flow rate (MFR$_2$), determined according to ISO 1133 at 190 °C and 2.16 kg, in the range from 0.1 to 3.0 g/10 min, more preferably in the range from 0.3 to 2.0 g/10 min, most preferably in the range from 0.5 to 1.0 g/10 min.

It is preferred that the ethylene polymer (PE1), more preferably the ethylene n-butyl acrylate copolymer (EBA), has a polar comonomer content, more preferably a n-butyl acrylate content, determined according to quantitative $^1$H-NMR spectroscopic analysis, in the range from 10 to 30 wt.-%, more preferably in the range from 13 to 25 wt.-%, most preferably in the range from 15 to 20 wt.-%.

It is preferred that the ethylene polymer (PE1), more preferably the ethylene n-butyl acrylate copolymer (EBA), has a melting temperature (T$_m$), determined according to ISO 11357/part3/method C2, in the range from 85 to 115 °C, more preferably in the range from 90 to 105 °C, most preferably in the range from 95 to 100 °C.

**Polyethylene composition (PC2)**

The polyethylene composition (PC2) of the second layer may, in the broadest sense, be any polyethylene composition.

It is, however, preferred that the polyethylene composition (PC2) comprises an ethylene polymer selected from the group consisting of:

a) an ethylene copolymer (b1) comprising monomer units of ethylene and one or more polar comonomer units selected from the group consisting of $(C_1-C_6)$-alkyl acrylate and $(C_1-C_6)$-alkyl $(C_1-C_6)$-alkylacrylate comonomer units, said ethylene copolymer (b1) additionally bearing silane units;

b) an ethylene polymer (b2) bearing silane units, wherein the ethylene polymer (b2) does not comprise polar comonomer units selected from the group consisting of $(C_1-C_6)$-alkyl acrylate and $(C_1-C_6)$-alkyl $(C_1-C_6)$-alkylacrylate comonomer units;

c) a copolymer of ethylene (b3) with vinyl acetate comonomer units; and

d) an ethylene/$C_3$-$C_{10}$ alpha olefin copolymer (b4) having a density, determined according to ISO 1183-187, in the range from 850 to 900 kg/m$^3$.

For each of ethylene copolymer (b1) and ethylene polymer (b2), it is preferred that the ethylene polymer has a density, determined according to ISO 1183-187, in the range from 920 to 960 kg/m$^3$, more preferably 930 to 955 kg/m$^3$, most preferably 940 to 950 kg/m$^3$.

For each of ethylene copolymer (b1) and ethylene polymer (b2), it is preferred that the ethylene polymer has a melt flow rate (MFR$_2$), determined according to ISO 1133 at 190 °C and 2.16 kg, in the range from 1.0 to 10.0 g/10 min, more preferably in the range from 2.0 to 7.0 g/10 min, most preferably in the range from 3.0 to 5.0 g/10 min.

For each of ethylene copolymer (b1) and ethylene polymer (b2), it is preferred that the ethylene polymer has a melting temperature (T$_m$), determined according to ISO 11357/part3/method C2, in the range from 85 to 115 °C, more preferably in the range from 87 to 100 °C, most preferably in the range from 90 to 95 °C.

The ethylene polymers (b1) and (b2) bear silane units. The silane units can be present as comonomer units of the ethylene polymer or as a compound grafted chemically to the ethylene polymer. Silane comonomer units means that the silane units are present in the ethylene polymer as comonomer units.

In case that the silane units are incorporated as comonomer units, the silane units are copolymerized as comonomer units with ethylene monomer units (and optionally other comonomer units, such as the polar comonomer units of ethylene copolymer (b1)) during the polymerization process of the ethylene polymer.

In the case that the silane units are incorporated into the copolymer of ethylene by grafting, the silane units are reacted chemically (also called as grafting), with the ethylene polymer after the polymerization of the ethylene polymer. The chemical reaction, i.e. grafting, is performed typically using a radical forming agent such as peroxide. In general, copolymerisation and grafting of the silane units to ethylene are well known techniques and well documented in the polymer field and within the skills of the person skilled in the art.

It is also well known that the use of peroxide in the grafting embodiment decreases the melt flow rate (MFR) of an ethylene polymer due to a simultaneous crosslinking reaction. As a result, the grafting embodiment can bring limitation to the choice of the MFR of the copolymer of ethylene as a starting polymer, which choice of MFR can have an adverse impact on the quality of the polymer at the end use application. Furthermore, the by-products formed from peroxide during the grafting process can have an adverse impact on the use of the polyethylene composition (PC2) at end use application. The copolymerisation of the silane comonomer units into the polymer backbone provides more uniform incorporation of the units compared to grafting of the units. Moreover, compared to grafting, the copolymerisation does not require the addition of peroxide after the polymer is produced.

It is preferred that the silane units of ethylene copolymer (b1) and/or (b2) are present as silane-containing comonomer units. In the case of ethylene copolymer (b 1), the silane units are copolymerized as comonomer units together with the ethylene monomer units and the polar comonomer units during the polymerization process of the ethylene copolymer (b 1). In the case of ethylene polymer (b2), the silane units are copolymerized as comonomer units together with the ethylene monomer units during the polymerization process of the ethylene polymer (b2).

The ethylene copolymer (b1) and/or ethylene polymer (b2) may be commercially available or can be prepared according to, or analogously to, known polymerization processes reported in the chemical literature.

The polymerization process of ethylene copolymer (b1) and/or ethylene polymer (b2) is preferably a high pressure polymerization process using free radical polymerization in the presence of one or more initiator(s) and optionally using a chain transfer agent (CTA) to control the MFR of the polymer. A suitable high pressure (HP) process with suitable polymerization conditions is described in WO 2018/141672.

Such HP polymerisation results in a so called low density polymer of ethylene (LDPE), herein to ethylene copolymer (b1) and/or ethylene polymer (b2). The term LDPE has a well-known meaning in the polymer field and describes the nature of polyethylene produced in HP, i.e. the typical features, such as different branching architecture, to distinguish the LDPE from PE produced in the presence of an olefin polymerisation catalyst (also known as a coordination catalyst). Although the term LDPE is an abbreviation for low density polyethylene, the term is understood not to limit the density range, but covers the LDPE-like HP polyethylenes with low, medium and higher densities.

The silane units, more preferably the silane comonomer units, of ethylene copolymer (b1) and/or (b2) are preferably a hydrolysable unsaturated silane compound represented by the formula (I)

$$R^1SiR^2_qY_{3-q} \qquad (I)$$

wherein

R$^1$ is an ethylenically unsaturated hydrocarbyl, hydrocarbyloxy or (meth)acryloxy hydrocarbyl group, each R$^2$ is independently an aliphatic saturated hydrocarbyl group,
Y which may be the same or different, is a hydrolysable organic group and

q is 0, 1 or 2;

Further suitable silane comonomer unit is e.g. gamma-(meth)acryl-oxypropyl trimethoxysilane, gamma(meth) acryloxypropyl triethoxysilane, and vinyl triacetoxysilane, or combinations of two or more thereof.

One suitable subgroup of compound of formula (I) is an unsaturated silane compound or, preferably, comonomer of formula (II)

$$CH_2=CHSi(OA)_3 \qquad (II)$$

wherein each A is independently a hydrocarbyl group having 1-8 carbon atoms, suitably 1-4 carbon atoms.

The silane unit, or preferably, the comonomer, of the invention, is preferably the compound of formula (II) which is vinyl trimethoxysilane, vinyl bismethoxyethoxysilane, vinyl triethoxysilane, more preferably vinyl trimethoxysilane or vinyl triethoxysilane.

The amount of the silane units, preferably silane comonomer units, present in the ethylene copolymer (b1) and/or (b2), is preferably in the range of from 1.0 to 5.0 wt.-%, more preferably from 1.1 to 2.0 wt.-%, most preferably from 1.2 to 1.6 wt.-%, based on the total weight of the ethylene copolymer (b1) and/or (b2).

The amount of the silane units, preferably silane comonomer units, present in the ethylene copolymer (b1) and/or (b2), is preferably in the range of from 0.05 to 2.0 mol-%, more preferably from 0.10 to 1.0 mol-%, most preferably from 0.20 to 0.50 mol-%, based on the total weight of the ethylene copolymer (b1) and/or (b2).

It is particularly preferred that the polyethylene composition (PC2) comprises an ethylene copolymer (b1) comprising monomer units of ethylene and one or more polar comonomer units selected from the group consisting of $(C_1-C_6)$-alkyl acrylate and $(C_1-C_6)$-alkyl $(C_1-C_6)$-alkylacrylate comonomer units, said ethylene copolymer (b1) additionally bearing silane units.

It is preferred that the polar comonomer units are selected from one or more $(C_1-C_6)$-alkyl acrylate comonomer units, more preferably from methyl acrylate (MA), ethyl acrylate (EA) or butyl acrylate (BA) comonomer units, most preferably from methyl acrylate comonomer units.

Without being bound by theory, methyl acrylate (MA) is the only acrylate which cannot go through the ester pyrolysis reaction, since does not have this reaction path. Therefore, the ethylene copolymer (b1) with MA comonomer units does not form any harmful free acid (acrylic acid) degradation products at high temperatures, whereby the ethylene copolymer (b1) comprising methyl acrylate comonomer units contributes to good quality and life cycle of the end article thereof. This is not the case e.g. with vinyl acetate units of EVA, since EVA forms harmful acetic acid degradation products at high temperatures. Moreover, the other acrylates like ethyl acrylate (EA) or butyl acrylate (BA) can go through the ester pyrolysis reaction, and if degrade, would form volatile olefinic by-products.

The amount of polar comonomer units present in the ethylene copolymer (b1) is preferably in the range of from 15 to 30 wt.-%, more preferably from 18 to 27 wt.-%, most preferably from 20 to 25 wt.-%, based on the total weight of the ethylene copolymer (b1).

The amount of polar comonomer units present in the ethylene copolymer (b1) is preferably in the range of from 5 to 12 mol-%, more preferably from 6 to 11 mol-%, most preferably from 7 to 10 mol-%, based on the total weight of the ethylene copolymer (b1).

It is most preferred that the polyethylene composition (PC2) comprises an ethylene copolymer (b1) that is a copolymer of ethylene with methyl acrylate, ethyl acrylate or butyl acrylate comonomer units and with vinyl trimethoxysilane, vinyl bismethoxyethoxysilane, vinyl triethoxysilane or vinyl trimethoxysilane comonomer units, more preferably with vinyl trimethoxysilane or vinyl triethoxysilane comonomer units.

More preferably the ethylene copolymer (b1) is a copolymer of ethylene with methyl acrylate comonomer units and with vinyl trimethoxysilane, vinyl bismethoxyethoxysilane, vinyl triethoxysilane or vinyl trimethoxysilane comonomer, still more preferably a copolymer of ethylene with methyl acrylate comonomer units and with vinyl trimethoxysilane or vinyl triethoxysilane comonomer units, most preferably a terpolymer (PE2) of ethylene, methyl acrylate (MA), and vinyltrimethoxysilane (VTMS).

The terpolymer (PE2) preferably has one or more, preferably all, of the following properties:

a) a density, determined according to ISO 1183-187, in the range from 920 to 960 kg/m$^3$, more preferably 940 to 955 kg/m$^3$, most preferably 945 to 950 kg/m$^3$;

b) a melt flow rate (MFR$_2$), determined according to ISO 1133 at 190 °C and 2.16 kg, in the range from 1.0 to 10.0 g/10 min, more preferably in the range from 2.0 to 7.0 g/10 min, most preferably in the range from 3.0 to 5.0 g/10 min;

c) a methyl acrylate (MA) content, determined according to quantitative $^1$H-NMR spectroscopic analysis, in the range from 15.0 to 30.0 wt.-%, more preferably in the range from 18.0 to 27.0 wt.-%, most preferably in the range from 20.0 to 25.0 wt.-%;

d) a vinyltrimethoxysilane (VTMS) content, determined according to quantitative $^1$H-NMR spectroscopic analysis, in the range from 1.0 to 5.0 wt.-%, more preferably in the range from 1.1 to 1.8 wt.-%, most preferably in the range from 1.2 to 1.6 wt.-%; and

e) a melting temperature ($T_m$), determined according to ISO 11357/part3/method C2, in the range from 85 to 115 °C, more preferably in the range from 87 to 100 °C, most preferably in the range from 90 to 95 °C.

In another preferred embodiment the polyethylene composition (PC2) comprises a copolymer of ethylene (b3) and vinyl acetate comonomer units (EVA).

The amount of the vinyl acetate (VA) comonomer units present in the copolymer of ethylene (b3) is preferably in the range of from 0.5 to 30.0 mol%, preferably from 2.5 to 20.0 mol%, still more preferably from 5.0 to 15.0 mol%, most preferably from 7.5 to 12.5 mol%, based on the total amount of monomer units in the copolymer of ethylene (b3).

The melt flow rate, $MFR_2$, of the copolymer of ethylene (b3) is preferably from 0.1 to 13 g/10 min, still more preferably from 1.0 to 50 g/10 min, more preferably from 5.0 to 45.0 g/10 min, more preferably from 7.5 to 40.0 g/10 min, most preferably from 10.0 to 35.0 g/10 min, when determined according to ISO 1133 at 190 °C and at a load of 2.16 kg.

The copolymer of ethylene (b3) preferably has a melting temperature of from 25 to 95°C, more preferably from 30°C to 90°C, still more preferably from 35°C to 85°C and most preferably from 40°C to 80°C. The preferable melting temperature is beneficial for instance for a lamination process, since the time of the melting/softening step can be reduced.

Preferably the density of the copolymer of ethylene (b3) is from 940 to 975 kg/m$^3$, preferably from 945 to 970 kg/m$^3$ and most preferably from 950 to 965 kg/m$^3$.

The copolymer of ethylene (b3) is preferably crosslinkable.

The copolymer of ethylene (b3) usually is commercially available but can be prepared according to or analogously to known polymerization processes described in the chemical literature.

Suitable commercially available copolymers of ethylene (b3) can be purchased e.g. from Hangzhou First Applied Material Co., Ltd (PR China).

In yet another preferred embodiment the polyethylene composition (PC2) comprises an ethylene/$C_3$-$C_{10}$ alpha olefin copolymer (b4), which has a density of from 850 to less than 900 kg/m$^3$, preferably from 860 to 890 kg/m$^3$, more preferably from 865 to 885 kg/m$^3$, determined according to ISO 1183. Said ethylene/$C_3$-$C_{10}$ alpha olefin copolymer (b4) qualifies as very low-density polyethylene (VLDPE).

The very low-density polyethylene (VLDPE) can be identified as elastomer. According to the IUPAC definition an elastomer is a polymer that displays rubber-like elasticity.

Polyethylene based elastomers are commercially available under the tradenames Queo™, Exact™, Engage™, F·RST® TF series and others.

The ethylene/$C_3$-$C_{10}$ alpha olefin copolymer (b4) preferably has a melt flow rate (ISO 1133, 2.16 kg, 190°C) of from 0.5 to 25.0 g/10 min, more preferably from 1.0 to 22.5 g/10 min, still more preferably from 2.5 to 20.0 g/10 min.

The ethylene/$C_3$-$C_{10}$ alpha olefin copolymer (b4) preferably has a melting temperature of from 25 to 95°C, more preferably from 30°C to 90°C, still more preferably from 35°C to 85°C and most preferably from 40°C to 80°C. The preferable melting temperature is beneficial for instance for a lamination process, since the time of the melting/softening step can be reduced.

The ethylene/$C_3$-$C_{10}$ alpha olefin copolymer (b4) is copolymer of ethylene and one or more comonomer units, preferably one comonomer, selected from alpha-olefins having from 3 to 10 carbon atoms, preferably from alpha-olefins having from 4 to 8 carbon atoms. It is preferred that the polymeric component is a copolymer of ethylene and 1-butene or a copolymer of ethylene and 1-octene.

It is preferred that component (b4) does not include any other monomers than ethylene and one or more comonomer units selected from alpha-olefins having from 3 to 10 carbon atoms, i.e. consists of monomer units selected from ethylene and one or more comonomer units, preferably one comonomer, selected from alpha-olefins having from 3 to 10 carbon atoms.

The ethylene/$C_3$-$C_{10}$ alpha olefin copolymer (b4) is preferably produced in a solution polymerization process using a metallocene catalyst, as known in the art.

The ethylene/$C_3$-$C_{10}$ alpha olefin copolymer (b4) is preferably crosslinkable.

As well as the ethylene polymer, the polyethylene composition (PC2) may comprise one or more additives (A2).

If present, the one or more additives (A2) are provided in an amount in the range from 0.0 to 5.0 wt.-%, relative to the total weight of the polyethylene composition (PC2).

The selection of suitable additives for the polyethylene composition (PC2) is within the general knowledge of the person skilled in the art.

For example, the one or more additives (A2) may be selected from the group consisting of flame retardants, antioxidants, stabilizers, fillers, nucleating agents, and antistatic agents.

Such additives are generally commercially available and are described, for example, in "Plastic Additives Handbook", pages 871 to 873, 5th edition, 2001 of Hans Zweifel.

It is understood that the content of additives (A2), given with respect to the total weight of the polyethylene composition (PC2), includes any carrier polymers used to introduce the additives to said polyethylene composition (PC2), i.e. masterbatch carrier polymers. An example of such a carrier polymer would be a polypropylene homopolymer in the form of powder.

Process

In a second aspect, the present invention is directed to a process for producing the film of the first aspect, comprising the following steps:

a) providing the polyolefin composition (PC1) and the polyethylene composition (PC2);
b) co-extruding one or more layers comprising the polyolefin composition (PC1) and at least one layer comprising the polyethylene composition (PC2), thereby obtaining the film according to any one of the preceding claims.

It is particularly preferred that only one layer comprising the polyethylene composition (PC2) is produced in step b).
The conditions for co-extruding such multilayer films are well-known in the art and are not particularly limited in the context of the process of the second aspect.
It is preferred that the film of the fist aspect is obtainable by, more preferably obtained by, the process of the second aspect.

Article

In a third aspect, the present invention is directed to an article comprising the given layers in the following order:

a) a first insulating film (F1);
b) an electrical device (D); and
c) a second insulating film (F2),

wherein the electrical device (D) has a first surface and a second surface located opposite the first surface,
wherein the first surface of the electrical device (D) is in adherent contact with a surface of the first insulating film (F 1) and the second surface of the electrical device (D) is in adherent contact with a surface of the second insulating film (F2), resulting in a layer structure F1-D-F2 having the electrical device (D) disposed between the first insulating film (F1) and the second insulating film (F2);
wherein at least one of the first insulating film (F1) and the second insulating film (F2), preferably both the first insulating film (F1) and the second insulating film (F2), is/are films according to the first aspect,
wherein, if the first insulating film (F1) is a film according to the first aspect, the electrical device is in adherent contact with the second layer (B) of the first insulating film (F 1), and
wherein, if the second insulating film (F2) is a film according to the first aspect, the electrical device is in adherent contact with the second layer (B) of the second insulating film (F2).

It is particularly preferred that both the first insulation film (F1) and the second insulating film (F2) are films according to the first aspect, more preferably first insulation film (F1) and the second insulating film (F2) are the same film according to the first aspect.
In the broadest sense, the electrical device (D) may be any suitable electrical device, as would be clear to the person skilled in the art. It is, however, preferred that the electrical device is not a photovoltaic element (also known as photovoltaic cell). The article of the third aspect is thus preferably not a photovoltaic module.
All fallback positions and preferred embodiments of the film of the first aspect apply mutatis mutandis to the first insulating film (F1) and/or second insulating film (F2) of the third aspect.

Use

In a final aspect, the present invention is directed to a use of the film of the first aspect as an insulating film for an electrical device.
In the broadest sense, the electrical device may be any suitable electrical device, as would be clear to the person skilled in the art. It is, however, preferred that the electrical device is not a photovoltaic element (also known as photovoltaic cell).
All fallback positions and preferred embodiments of the film of the first aspect apply mutatis mutandis to the film of the final aspect.

**EXAMPLES**

**1. Determination methods**

The following definitions of terms and determination methods apply for the above general description of the invention including the claims as well as to the below examples unless otherwise defined.

**CRYSTEX QC analysis**

***Crystalline and soluble fractions method***

The crystalline (CF) and soluble fractions (SF) of the PCR polypropylene resins as well as the ethylene contents and intrinsic viscosities of the respective fractions were analyzed by use of the CRYSTEX instrument, Polymer Char (Valencia, Spain) in line with ISO16152-2022 - Method 2. Details of the technique and the method can be found in literature (Ljiljana Jeremic, Andreas Albrecht, Martina Sandholzer & Markus Gahleitner (2020) Rapid characterization of high-impact ethylene propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands ($CH_3$ stretching vibration (centered at app. 2960 $cm^{-1}$) and the CH stretching vibration (2700-3000 $cm^{-1}$) that are serving for the determination of the concentration and the ethylene content in ethylene-propylene copolymers. The IR4 detector is calibrated with series of 8 EP copolymers with known ethylene content in the range of 2 wt.-% to 69 wt.-% (determined by $^{13}$C-NMR) and each at various concentrations, in the range of 2 and 13 mg/ml. To encounter for both features, concentration and ethylene content at the same time for various polymer concentrations expected during Crystex analyses the following calibration equations were applied:

$$\text{Conc} = a + b*\text{Abs(CH)} + c*(\text{Abs(CH)})^2 + d*\text{Abs(CH}_3) + e*(\text{Abs(CH}_3)^2 + f*\text{Abs(CH)}*\text{Abs(CH}_3)$$

(Equation 1)

$$CH_3/1000C = a + b*\text{Abs(CH)} + c* \text{Abs(CH3)} + d * (\text{Abs(CH}_3)/\text{Abs(CH)}) + e * (\text{Abs(CH}_3)/\text{Abs(CH)})^2$$

(Equation 2)

The constants a to e for equation 1 and a to f for equation 2 were determined by using least square regression analysis.

The $CH_3/100C$ is converted to the ethylene content in wt.-% using following relationship:

$$\text{Wt.-\% (ethylene in EP copolymers)} = 100 - CH_3/1000TC * 0.3 \qquad \text{(Equation 3)}$$

Intrinsic viscosity (IV) of the PCR polypropylene resin and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$\text{IV (dL/g)} = a* \text{Vsp/c} \qquad \text{(Equation 4)}$$

The samples to be analyzed are weighed out in concentrations of 10 mg/ml to 20 mg/ml. To avoid injecting possible gels and/or polymers which do not dissolve in TCB at 160 °C, like PET and PA, the weighed out sample was packed into a stainless steel mesh MW 0,077/D 0.05 mm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400 rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV [dl/g] and the C2 [wt.-%] of the PP composition. During the second injection the soluble fraction (at low temperature) and the crystalline fraction (at high temperature) with the crystallization cycle are measured (wt.-% SF, wt.-% CF, wt.-% C2, wt.-% C2(SF), wt.-% C2(CF), IV(SF), IV(CF)), where the wt.-% CF is calculated in the following way:

$$\text{Wt.-\% CF} = 100 - \text{wt.-\% SF (Equation 5)}$$

**Microstructure quantification by NMR spectroscopy**

Quantitative nuclear-magnetic resonance (NMR) spectroscopy was used to quantify the comonomer and regiodefect content of the propylene polymers (i.e. the heterophasic propylene-ethylene copolymers).

Quantitative $^{13}$C{$^{1}$H} NMR spectra were recorded in the solution-state using a Bruker Avance III 400 NMR spectrometer operating at 400.15 and 100.62 MHz for $^{1}$H and $^{13}$C respectively. All spectra were recorded using a $^{13}$C optimised 10 mm extended temperature probehead at 125°C using nitrogen gas for all pneumatics. Approximately 200 mg of material was dissolved in approximately 3 ml of 1,2-tetrachloroethane-$d_2$ (TCE-$d_2$) along with chromium-(III)-acetylacetonate (Cr(acac)$_3$) resulting in a 65 mM solution of relaxation agent in solvent {singh09}. To ensure a homogenous solution, after initial sample preparation in a heat block, the NMR tube was further heated in a rotary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {zhou07,busico07}. A total of 6144 (6k) transients were acquired per spectra.

Quantitative $^{13}$C{$^{1}$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed {wang00, cheng84, randall89}.

The comonomer fraction was quantified using the method of Wang et. al. {wang00} through integration of multiple signals across the whole spectral region in the $^{13}$C{$^{1}$H} spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to be not present. This approach reduced the overestimation of ethylene content for such systems and was achieved by reduction of the number of sites used to determine the absolute ethylene content. Through the use of this set of sites the corresponding integral equation becomes

$$p_S = I_A + (0.5 * I_B)$$

$$p_T = I_D + I_F + I_D$$

$$p = (p_S + p_T) / 2$$

$$e = 0.5 * (I_H + (0.5 * I_B))$$

$$fE = e / (e + p)$$

using the same notation used in the article of Wang et. al. {wang00}.

The mole percent comonomer incorporation was calculated from the mole fraction:

$$E \text{ [mol-\%]} = 100 * fE$$

The weight percent comonomer incorporation was calculated from the mole fraction:

$$E \, [\text{wt.-\%}] = 100 * (\, fE * 28.06\,) / (\,(fE * 28.06) + ((1-fE) * 42.08)\,)$$

Characteristic signals corresponding to regio defects were observed {resconi00, wang00}. The presence of isolated 2,1-erythro regio defects was indicated by the presence of the two methyl sites at 17.7 and 17.2 ppm and confirmed by other characteristic sites. The presence of 2,1 regio defect adjacent an ethylene unit was indicated by the two inequivalent $S\alpha\beta$ signals at 34.9 ppm and 34.7 ppm respectively and the $T\gamma\gamma$ at 34.1 ppm.

The amount of isolated 2,1-erythro regio defects ($P_{21e\,isolated}$) was quantified using the average integral of the two characteristic methyl sites at 17.7 ($I_{e8}$) and 17.4 ($I_{e6}$) ppm respectively:

$$P_{21e\,isolated} = (\, I_{e6} + I_{e8}\,) / 2$$

The amount of 2,1 regio defect adjacent to ethylene ($P_{E21}$) was quantified using the methine site at 34.1 ppm ($I_{T\gamma\gamma}$):

$$P_{E21} = I_{T\gamma\gamma}$$

The total amount of propene ($P_{total}$) was quantified based on the methyl region ($I_{CH3}$) between 23.0 and 19.9 ppm with correction undertaken for sites included in this region not related to propene insertion. The methyl group $P_{\gamma\gamma}$ resulting from 2,1 regio defect adjacent to ethylene is already present in $I_{CH3}$:

$$P_{total} = I_{CH3} + 2 * P_{21e\,isolated}$$

The isolated 2,1-erythro regio defects ($P_{21e\,isolated}$) is multiplied by 2 to take into account the two (2) propene units in the 2, 1-erythro regio defects.

The mole percent of isolated 2,1-erythro regio defects was quantified with respect to all propene:

$$[21e]\,\text{mol-\%} = 100 * P_{21e\,isolated} / P_{total}$$

The mole percent of 2,1 regio defects adjacent to ethylene was quantified with respect to all propene:

$$[E21]\,\text{mol-\%} = 100 * P_{E21} / P_{total}$$

The total amount of 2,1 defects was quantified as following:

$$[21]\,\text{mol-\%} = [21e] + [E21]$$

Characteristic signals corresponding to other types of regio defects (2,1-threo, 3,1 insertion) were not observed {resconi00}.

| | |
|---|---|
| zhou07 | Zhou, Z., Kuemmerle, R., Qiu, X., Redwine, D., Cong, R., Taha, A., Baugh, D. Winniford, B., J. Mag. Reson. 187 (2007) 225 |
| busico07 | Busico, V., Carbonniere, P., Cipullo, R., Pellecchia, R., Severn, J., Talarico, G., Macromol. Rapid Commun. 2007, 28, 1128 |
| resconi00 | Resconi, L., Cavallo, L., Fait, A., Piemontesi, F., Chem. Rev. 2000, 100, 1253 |
| wang00 | Wang, W-J., Zhu, S., Macromolecules 33 (2000), 1157 |
| cheng84 | Cheng, H. N., Macromolecules 17 (1984), 1950 |
| singh09 | Singh, G., Kothari, A., Gupta, V., Polymer Testing 28 5 (2009), 475 |
| randall89 | Randall, J. Macromol. Sci., Rev. Macromol. Chem. Phys. 1989, C29, 201. |

## Comonomer content of C2C8 elastomers

The 1-octene comonomer content was determined as described in WO 2019/134904 for the comonomer content quantification of poly(ethylene-co-1-octene) copolymers.

**Comonomer content of E/MA/TMS terpolymers and of EBA polymers**

The methyl acrylate, vinyltrimethoxysilane, and butyl acrylate comonomer contents were determined as described in WO 2018/171951 A1 for the comonomer content quantification of the polar comonomer present in the polymer (a) and the content (wt% and mol%) of silane group(s) containing units (preferably comonomer) present in the polymer (a).

**Melt Flow Rate**

The melt flow rate (MFR) was determined according to ISO 1133 and was indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg. The $MFR_2$ of polyethylene is measured at a temperature 190 °C and a load of 2.16 kg.

**Density**

The density is measured according to ISO 1183-187. Sample preparation is done by compression moulding in accordance with ISO 1872-2:2007.

**Xylene cold solubles (XCS)**

The xylene soluble (XS) fraction as defined and described in the present invention is determined in line with ISO 16152 as follows: 2.0 g of the polymer were dissolved in 250 ml p-xylene at 135°C under agitation. After 30 minutes, the solution was allowed to cool for 15 minutes at ambient temperature and then allowed to settle for 30 minutes at 25 +/- 0.5°C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows:

$XS\% = (100 * m * V_0)/(m_0 * v)$; $m_0$ = initial polymer amount (g); m = weight of residue (g); $V_0$ = initial volume (ml); v = volume of analysed sample (ml).

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature ($T_c$) and crystallization enthalpy ($H_c$) are determined from the cooling step, while melting temperature ($T_m$) and melting enthalpy ($H_m$) are determined from the second heating step.

**Peel Force test**

Glass bars of 3x30 cm dimension were laminated in a following construction: glass bar / layer B / small teflon sheet / layer A. A small sheet of Teflon is inserted in the upper middle on the glass, this will generate a small part of the PP outer layer that is not adhered to the PE adhesive layer. This pat will be used as the cutting and anchoring point for the tensile testing device. All vacuum laminations were performed at 150°C, using 4 minutes of evacuation time and 6 minutes holding time with membrane down at a pressure at 800 mbar. The laminate is then cut along the laminate to one stripe, with 13 mm width, the cut goes through the PP layer and the PE film all the way down to the glass surface.
The laminate is mounted in the tensile testing equipment and the clamp of the tensile testing device is attached to the end of the strip.
The pulling angle is 90° in relation to the laminate and the pulling speed is 50 mm/min.
The adhesion force is the average force per 50 mm of peeling starting 0mm into the strip and ending at 100mm.
The average force over the 50 mm is divided by 1.3 as the width of the strip is 13 mm and presented as the adhesion strength (N/cm).

**UL 94 thin material vertical burning test**

Monolayer films as produced below were tested according to UL94 test, chapter 11. 200 x 50 mm specimens were rolled to tubular and conical form (around a 13mm diameter mandrel) according to the testing procedure. 5 samples each were tested, and 3 seconds flame was applied 2 times on each sample. Afterflame times were recoded, as well as, whether the specimens burn up to 125mm mark. Also dripping behavior and especially the presence of burning particles igniting cotton indicator was rated. Samples were classified VTM-0, VTM-2 and fail as described in the standard.

## 2. Examples

### 2.1 Synthesis of the heterophasic propylene-ethylene copolymers (HECO)

HECO1 is the commercially available grade BA202E, available from Borealis AG.

The catalyst used to prepare HECO2 was a Ziegler-Natta catalyst as used in the inventive examples of WO 2016/066446 A1 and pre-polymerized with vinylcyclohexane to achieve nucleation with poly(vinylcyclohexane). Nucleation by prepolymerization with vinylcyclohexane is described in EP 2 960 256 B1 and EP 2 960 279 B1 in detail.

For HECO2, dicyclopentyl dimethoxy silane (donor D) was used as external donor and triethyl aluminium (TEAL) was used as co-catalyst.

The polymerization conditions for HECO2 are presented in Table 1 below.

HECO3 was prepared according to the procedure of HECOB of WO 2017/071847 A1.

The resultant polymer powders of HECO2 and HECO 3were compounded with 1500 ppm ADK-STAB A-612 (supplied by Adeka Corporation) and 300 ppm Synthetic hydrotalcite (ADK STAB HT supplied by Adeka Corporation) on a ZSK 58 twin screw extruder, with melt temperature of 205 °C, production rate 200 kg/h.

**Table 1** Polymerization conditions for HECO2.

| | | HECO2 |
|---|---|---|
| **Prepolymerization (R0)** | | |
| TEAL/Ti ratio | [mol/mol] | 78 |
| TEAL/donor ratio | [mol/mol] | 12 |
| Temperature | [°C] | 21 |
| Pressure | [kPa] | 5460 |
| H2/C3 | [mol/kmol] | 0.3 |
| **Loop reactor (R1)** | | |
| Temperature | [°C] | 80 |
| Split | [wt.-%] | 46.9 |
| H2/C3 | [mol/kmol] | 0.6 |
| $MFR_2$ (h-PP1) | [g/10 min] | 3.4 |
| **1st Gas phase reactor (R2)** | | |
| Temperature | [°C] | 85 |
| Split | [wt.-%] | 38.4 |
| Split ratio (R1/R2) | [-] | 55:45 |
| H2/C3 | [mol/kmol] | 11.0 |
| $MFR_2$ (h-PP2) | [g/10 min] | 2.6 |
| $MFR_2$ (M) | [g/10 min] | 3.0 |
| **2nd Gas phase reactor (R3)** | | |
| Temperature | [°C] | 70 |
| Split | [wt.-%] | 14.7 |
| H2/C2 | [mol/kmol] | 313 |
| C2/C3 | [mol/kmol] | 426 |

Properties of HECO1 to HECO3 are given in Table 2.

**Table 2** Properties of the heterophasic propylene-ethylene copolymers (HECO)

| | | HECO1 | HECO2 | HECO3 |
|---|---|---|---|---|
| $MFR_2$ | [g/10 min] | 0.3 | 3.0 | 15.0 |
| C2(total) | [wt.-%] | 8.0 | 5.3 | 17.4 |
| SF | [wt.-%] | 13.2 | 13.1 | 31.7 |
| CF | [wt.-%] | 86.8 | 86.9 | 68.3 |
| C2(SF) | [wt.-%] | 42.0 | 30.0 | 39.5 |
| C2(CF) | [wt.-%] | 3.7 | 2.4 | 7.1 |
| iV | [dL/g] | 3.99 | 2.47 | 1.84 |
| iV(SF) | [dL/g] | 3.72 | 1.71 | 2.23 |
| iV (CF) | [dL/g] | 3.91 | 2.53 | 1.62 |
| Tm | [°C] | 163 | 168 | 164 |
| Tc | [°C] | 118 | 130 | 119 |
| 2,1 -regiodefects | [%] | none | none | none |

**2.2 Production of ethylene-containing polymers (PE1 and PE2)**

PE1 is an ethylene butyl acrylate copolymer having an $MFR_2$ (190 °C) of 0.85 g/10 min, a density of 924.5 kg/m$^3$, an n-butyl acrylate content of 17 wt.-%, and a melting temperature of 97 °C.

PE1 was produced as follows: Fresh ethylene and recycled ethylene and comonomer butyl acrylate was compressed to reach an initial reactor pressure of 2500 bars in two parallel streams to supply the front and the side of a split feed 2 zone reactor with a varying LID between around 17300 to 30400. Comonomer was added in amounts to reach 17 wt.-% in the final polymer. An $MFR_2$ of the final polymer of 0.85 g/10 min was maintained. After compression, the front stream was heated to 151°C in a preheating section before entering the front zone of the reactor and the side stream was cooled and entered at the side of the reactor. Mixtures of commercially available peroxide radical initiators dissolved in an essentially inert hydrocarbon solvent were injected after the preheating section and at one more position along the reactor in amounts sufficient for the exothermal polymerization reaction to reach peak temperatures of 275 °C, and 260 °C respectively, with cooling in-between to 170 °C. The reaction mixture was depressurized by a pressure control valve, cooled and the polymer was separated from unreacted gas.

PE2 is an ethylene/methyl acrylate/vinyltrimethoxysilane terpolymer having an $MFR_2$ (190 °C) of 3.5 g/10 min, a density of 948.2 kg/m$^3$, a methyl acrylate content of 22.5 wt.-% (8.75 mol-%), a vinyl trimethoxysilane content of 1.4 wt.-% (0.32 mol-%), and a melting temperature of 92 °C.

PE2 was produced in a commercial high pressure tubular reactor at a pressure of 2500-3000 bar and max temperature 250-350 °C using conventional peroxide initiator. Ethylene monomer, methyl acrylated (MA) polar comonomer and vinyl trimethoxysilane (VTMS) comonomer were added to the reactor system in a conventional manner. Chain transfer agent(s) (CTA) was used to regulated MFR as well known for a skilled person. The balance of properties described for PE2 above would enable the skilled person to suitably adjust the polymerization conditions to achieve the required balance.

**2.3 Production of films**

Co-extruded multilayer films were produced using the recipes for IE1 and IE2 in Table 3. The compositions used in each layer of the multilayer films were prepared in a co-rotating twin-screw extruder (Coperion ZSK 40) at 220 °C according to the recipes in Table 3.

The inventive multilayer films were prepared on a Dr. Collin cast film line consisting of 3 automatically controlled extruders, a chill roll unit, a take-off unit with a cutting station and three winders to wrap the film and edge strips. Each layer was extruded with an individual extruder: a first layer (layer A') was extruded with a first extruder equipped with 30 mm screw with LD of 30 at a screw speed of 54 rpm, a melt temperature of 224 °C and a melt pressure of 190 bar. A second layer (layer A) was extruded with extruder equipped with 25 mm screw with LD of 30 at a screw speed of 106 rpm, a melt temperature of 225 °C and a melt pressure of 207 bar. A third layer (layer B) was extruded with extruder equipped with 25 mm screw with LD of 30 at a screw speed of 141 rpm, a melt temperature of 160 °C and a melt pressure of 145 bar. The thickness of each layer A' was 25 $\mu$m, for each core layer A was 100 $\mu$m, and for each layer B was 100 $\mu$m resulting in a film thickness of the 3-layer coextruded film of 225 μm. The chill roll is cooled to 25 °C. The die width is 0.5-1.5 mm. Layers A' and A have the same composition (i.e. the composition given in Table 3 for layer A), whilst layer B has the composition given in Table 3 for layer B.

Additionally, monolayer films corresponding to the layer A composition were produced for each of CE1 to CE5, IE1 and IE2. The comparative monolayer films were produced on a Plastik Maschinenbau PM 30 extruder, having a screw speed of 80 rpm, a melt temperature of 245-250 °C, and melt pressure of 45-63 bar to yield 200 μm films of CE1 to CE5 and the inventive monolayer films were produced on a Dr. Collin single screw (30mm) cast film line having a screw speed of 193 rpm, a melt temperature of 220-222 °C, and melt pressure of 204-211 bar to yield 300 μm films of IE1 and IE2.

The monolayer films thus produced were used to obtain the UL94 data presented in Table 3 and the peel test data presented in Table 3 (in combination with a 450 μm film of PE3, produced on a Dr. Collin single screw (30mm) cast film line having a screw speed of 168 rpm, a melt temperature of 162 °C, and melt pressure of 96 bar).

The following components were employed in Table 3:

PE-a     an elastomeric ethylene-octene copolymer with a trade name of Queo 8230, commercially available from Borealis AG, having an $MFR_2$ (190 °C) of 30 g/10 min, a density of 883 kg/m$^3$, a 1-octene content of 9.6 mol-%, and a melting temperature of 76 °C.

PE-b     an elastomeric ethylene-octene copolymer with a trade name of Queo 2M138, commercially available from Borealis AG, having an $MFR_2$ (190 °C) of 30 g/10 min, a density of 883 kg/m$^3$, a 1-octene content of 11.0 mol-%, and a melting temperature of 52 °C.

FR1     an inorganic phosphinate-based flame retardant having the trade name Phoslite B404A, commercially available from Italmatch Chemicals (Italy).

FR2     an inorganic phosphinate-based flame retardant having the trade name Phoslite B407A, commercially available from Italmatch Chemicals (Italy).

TiO$_2$ MB     a titanium dioxide masterbatch containing 70 wt.-% of titanium dioxide, commercially available under the trade name Polywhite P 8377 CL from LyondellBasell (Italy)).

A     an additive mixture, consisting of 0.40 wt.-% of an antioxidant with a trade name of Irganox 1010 (CAS-no. 6683-19-8), available from BASF AG (Germany) and 0.50 wt.-% of an antioxidant with a trade name of Irgafos 168 (CAS-no. 31570-04-4), available from BASF AG (Germany).

**Table 3** Recipes and properties of Comparative and Inventive multilayer films

|  |  | CE1 | CE2 | CE3 | CE4 | CE5 | IE1 | IE2 |
|---|---|---|---|---|---|---|---|---|
| **Layer A** | | | | | | | | |
| HECO1 | [wt.-%] | - | - | - | - | - | 64.1 | 64.1 |
| HECO2 | [wt.-%] | 45.0 | 94.0 | 87.0 | 37.4 | 34.6 | - | - |
| HECO3 | [wt.-%] | - | - | - | 56.1 | 51.9 | - | - |
| PE-a | [wt.-%] | - | - | 7.0 | - | - | - | - |
| PE-b | [wt.-%] | - | - | - | - | 7.0 | - | - |
| PE1 | [wt.-%] | - | - | - | - | - | 20.0 | 20.0 |
| FR1 | [wt.-%] | 10.0 | 6.0 | 6.0 | 6.0 | 6.0 | - | 8.0 |
| FR2 | [wt.-%] | - | - | - | - | - | 8.0 | - |
| TiO$_2$ MB | [wt.-%] | 45.0 | - | - | - | - | 7.0 | 7.0 |
| A | [wt.-%] | - | - | - | - | - | 0.9 | 0.9 |
| **Layer B** | | | | | | | | |
| PE2 | [wt.-%] | 100 | 100 | 100 | 100 | 100 | 100 | 100 |

(continued)

| Performance | | | | | | | | |
|---|---|---|---|---|---|---|---|---|
| Peel Test | [N/cm] | 7.3 | 7.6 | 9.5 | 8.1 | 9.7 | 19.6 | 19.3 |
| UL94 | [-] | VTM-0 | VTM-0 | VTM-0 | VTM-0 | VTM-0 | VTM-0 | VTM-0 |

As can be seen from Table 3, the inventive films, in which layer A comprises an ethylene butyl acrylate copolymer, have significantly increased adhesion between layer A and layer B. Furthermore, this improved adhesion is achieved without sacrificing critical properties, such as flame retardance.

**Claims**

1.   A film that comprises, in the given order, the following layers:

   a) one or more first layer(s) (A) comprising a polyolefin composition (PC1) comprising:

   i) a polypropylene (PP1); and
   ii) an ethylene polymer (PE1) comprising monomer units of ethylene and one or more polar comonomer units selected from the group consisting of $(C_1-C_6)$-alkyl acrylate and $(C_1-C_6)$-alkyl $(C_1-C_6)$-alkylacrylate comonomer units,

   b) a second layer (B) comprising a polyethylene composition (PC2),

   wherein a surface of the second layer (B) is in adherent contact with a surface of one of the first layer(s) (A).

2.   The film according to claim 1, wherein the one or more first layer(s) (A) and second layer (B) are co-extruded.

3.   The film according to claim 1 or claim 2, wherein the polyethylene composition (PC2) comprises an ethylene polymer selected from the group consisting of:

   a) an ethylene copolymer (b1) comprising monomer units of ethylene and one or more polar comonomer units selected from the group consisting of $(C_1-C_6)$-alkyl acrylate and $(C_1-C_6)$-alkyl $(C_1-C_6)$-alkylacrylate comonomer units, said ethylene copolymer (b1) additionally bearing silane units;
   b) an ethylene polymer (b2) bearing silane units, wherein the ethylene polymer (b2) does not comprise polar comonomer units selected from the group consisting of $(C_1-C_6)$-alkyl acrylate and $(C_1-C_6)$-alkyl $(C_1-C_6)$-alkylacrylate comonomer units;
   c) a copolymer of ethylene (b3) with vinyl acetate comonomer units; and/or
   d) an ethylene/$C_3-C_{10}$ alpha olefin copolymer (b4) having a density, determined according to ISO 1183-187, in the range from 850 to 900 kg/m$^3$.

4.   The film according to claim 3, wherein the silane units of ethylene copolymer (b1) and/or (b2) are present as silane-containing comonomer units.

5.   The film according to any one of the preceding claims, wherein the polyethylene composition (PC2) comprises a terpolymer (PE2) of ethylene, methyl acrylate (MA) and vinyltrimethoxysilane (VTMS) having one or more, preferably all, of the following properties:

   a) a density, determined according to ISO 1183-187, in the range from 920 to 960 kg/m$^3$;
   b) a melt flow rate (MFR$_2$), determined according to ISO 1133 at 190 °C and 2.16 kg, in the range from 1.0 to 10.0 g/10 min;
   c) a methyl acrylate (MA) content, determined according to quantitative $^1$H-NMR spectroscopic analysis, in the range from 15.0 to 30.0 wt.-%;
   d) a vinyltrimethoxysilane (VTMS) content, determined according to quantitative $^1$H-NMR spectroscopic analysis, in the range from 1.0 to 5.0 wt.-%; and/or
   e) a melting temperature (T$_m$), determined according to ISO 11357/part3/method C2, in the range from 85 to 115 °C.

6. The film according to any one of the preceding claims, wherein the ethylene polymer (PE1) of the polyolefin composition (PC1) comprises ethylene and one or more $(C_1\text{-}C_6)$-alkyl acrylate comonomer units, more preferably the comonomer units are selected from methyl acrylate, ethylene acrylate, n-propyl acrylate and n-butyl acrylate or n-pentyl acrylate, most preferably the ethylene polymer (PE1) is an ethylene n-butyl acrylate copolymer (EBA).

7. The film according to any one of the preceding claims, wherein the ethylene polymer (PE1) of the polyolefin composition (PC1) has one or more, preferably all, of the following properties:

   a) a density, determined according to ISO 1183-187, in the range from 910 to 940 $kg/m^3$;
   b) a melt flow rate (MFR$_2$), determined according to ISO 1133 at 190 °C and 2.16 kg, in the range from 0.1 to 3.0 g/10 min;
   c) a polar comonomer content, more preferably a n-butyl acrylate content, determined according to quantitative $^1$H-NMR spectroscopic analysis, in the range from 10 to 30 wt.-%; and/or
   d) a melting temperature (T$_m$), determined according to ISO 11357/part3/method C2, in the range from 90 to 105 °C.

8. The film according to any one of the preceding claims, wherein the polypropylene (PP1) of the polyolefin composition (PC1) is a heterophasic propylene-ethylene copolymer (HECO1), comprising:

   i) a crystalline matrix (M1) being a propylene homopolymer or propylene-ethylene copolymer, most preferably a propylene homopolymer; and
   ii) an amorphous propylene-ethylene elastomer (E1) that is dispersed in said crystalline matrix (M1),
   wherein the crystalline matrix (M1) is preferably free from 2,1-regiodefects, as determined by quantitative $^{13}$C-NMR spectroscopic analysis, and
   wherein the heterophasic propylene-ethylene copolymer (HECO1) has one or more, preferably all, of the following properties:

   a) a melt flow rate (MFR$_2$), determined according to ISO 1133 at 230 °C and 2.16 kg, in the range from 0.05 to 10.0 g/10 min;
   b) a soluble fraction (SF) content, determined by crystallization extraction (CRYSTEX) analysis, in the range from 8.0 to 20.0 wt.-%, based on the total weight of the heterophasic propylene-ethylene copolymer (HECO1), and a crystalline fraction (CF) content, determined by crystallization extraction (CRYSTEX) analysis, in the range from 80.0 to 92.0 wt.-%, based on the total weight of the heterophasic propylene-ethylene copolymer (HECO1);
   c) an ethylene content (C2(total)), determined by CRYSTEX QC analysis, in the range from 5.0 to 12.0 wt.-%;
   d) an ethylene content of the soluble fraction (C2(SF)), determined by CRYSTEX QC analysis, in the range from 30.0 to 60.0 wt.-%;
   e) an ethylene content of the crystalline fraction (C2(CF)), determined by CRYSTEX QC analysis, in the range from 2.0 to 7.0 wt.-%;
   f) an intrinsic viscosity of the soluble fraction (iV(SF)), determined by CRYSTEX QC analysis, in the range from 2.20 to 5.20 dL/g;
   g) an intrinsic viscosity of the crystalline fraction (iV(CF)), determined by CRYSTEX QC analysis, in the range from 2.50 to 5.50 dL/g;
   h) a melting temperature (T$_m$), determined according to ISO 11357/part3/method C2, in the range from 155 to 172 °C; and/or
   i) a crystallization temperature (T$_c$), determined according to ISO 11357/part3/method C2, in the range from 110 to 125 °C.

9. The film according to any one of the preceding claims, wherein the polyolefin composition (PC1) further comprises one or more flame retardants (FR), wherein at least one of the one or more flame retardants comprises an inorganic phosphorus compound, preferably an inorganic phosphinate salt and/or wherein the polyolefin composition (PC1) further comprises one or more pigments (P), preferably wherein at least one of the one or more pigments is an inorganic pigment, more preferably a white inorganic pigment, most preferably titanium dioxide.

10. The film according to any one of the preceding claims, wherein the polyolefin composition (PC1) comprises, more preferably consists of:

    a) an amount in the range from 40.0 to 90.0 wt.-%, more preferably from 50.0 to 87.0 wt.-%, most preferably from 60.0 to 85.0 wt.-%, relative to the total weight of the polyolefin composition (PC1), of the polypropylene (PP1), more preferably of the heterophasic propylene-ethylene copolymer (HECO1) according to claim 8;

b) an amount in the range from 10.0 to 35.0 wt.-%, more preferably from 13.0 to 30.0 wt.-%, most preferably from 15.0 to 25.0 wt.-%, relative to the total weight of the polyolefin composition (PC1), of the ethylene polymer (PE1), more preferably the ethylene polymer (PE1) according to claim 6 or 7;

c) optionally, an amount in the range from 0.0 to 15.0 wt.-%, more preferably from 2.0 to 12.0 wt.-%, most preferably from 5.0 to 10.0 wt.-%, relative to the total weight of the polyolefin composition (PC1), of the one or more flame retardants (FR) according to claim 9;

d) optionally, an amount in the range from 0.0 to 15.0 wt.-%, more preferably from 1.0 to 10.0 wt.-%, most preferably from 3.0 to 7.0 wt.-%, relative to the total weight of the polyolefin composition (PC1), of the one or more pigments (P) according to claim 9; and

e) optionally, an amount in the range from 0.0 to 5.0 wt.-%, relative to the total weight of the polyolefin composition (PC1), of one or more additives (A1) other than flame retardants and pigments.

11. The film according to any one of the preceding claims that consists of the one or more first layer(s) (A) and the second layer (B).

12. The film according to any one of the preceding claims, wherein the peel force between the polyolefin composition (PC1) and the polyethylene composition (PC2), determined according to the method given in the determination methods, is in the range from 10 to 50 N/cm, more preferably in the range from 12 to 40 N/cm, most preferably in the range from 15 to 30 N/cm.

13. A process for producing the film according to any one of the preceding claims, comprising the following steps:

a) providing the polyolefin composition (PC1) and the polyethylene composition (PC2); and

b) co-extruding one or more layers comprising the polyolefin composition (PC1) and at least one layer comprising the polyethylene composition (PC2), thereby obtaining the film according to any one of the preceding claims.

14. An article comprising the given layers in the following order:

a) a first insulating film (F1);

b) an electrical device (D); and

c) a second insulating film (F2),

wherein the electrical device (D) has a first surface and a second surface located opposite the first surface, wherein the first surface of the electrical device (D) is in adherent contact with a surface of the first insulating film (F1) and the second surface of the electrical device (D) is in adherent contact with a surface of the second insulating film (F2), resulting in a layer structure F1-D-F2 having the electrical device (D) disposed between the first insulating film (F1) and the second insulating film (F2);

wherein at least one of the first insulating film (F1) and the second insulating film (F2), preferably both the first insulating film (F1) and the second insulating film (F2), is/are films according to any one of claims 1 to 12,

wherein, if the first insulating film (F1) is a film according to any one of claims 1 to 12, the electrical device is in adherent contact with the second layer (B) of the first insulating film (F1), and

wherein, if the second insulating film (F2) is a film according to any one of claims 1 to 12, the electrical device is in adherent contact with the second layer (B) of the second insulating film (F2).

15. A use of the film according to any one of claims 1 to 12 as an insulating film for an electrical device.

Europäisches
Patentamt

European
Patent Office

Office européen
des brevets

# EUROPEAN SEARCH REPORT

**Application Number**

**EP 24 17 3552**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | KR 102 346 374 B1 (RIKEN TECHNOS CORP [JP]) 3 January 2022 (2022-01-03)<br>* abstract; claims 1-9 *<br>* paragraphs [0008] - [0016] *<br>* paragraphs [0044], [0049] *<br>* paragraphs [0053], [0055], [0059] *<br>* paragraphs [0067], [0068] *<br>----- | 1,2,6,9,<br>11<br>3-5,7,8,<br>10,12-15 | INV.<br>B32B27/08<br>B29C48/00<br>B32B27/18<br>B32B27/20<br>B32B27/30<br>B32B27/32<br>C08J5/18<br>C08L23/04 |
| X | EP 3 576 942 B1 (BOREALIS AG [AT]) 31 May 2023 (2023-05-31)<br>* abstract; claims 1-18 *<br>----- | 1-15 | |
| A | EP 3 848 433 A1 (BOREALIS AG [AT]) 14 July 2021 (2021-07-14)<br>* abstract; claims 1-15 *<br>----- | 1-15 | |
| A | US 2023/212379 A1 (AARNIO-WINTERHOF MINNA [AT] ET AL) 6 July 2023 (2023-07-06)<br>* abstract; claims 1-14 *<br>----- | 1-15 | |

TECHNICAL FIELDS
SEARCHED     (IPC)

B32B
C08J
B29C
C08L

The present search report has been drawn up for all claims

| Place of search | Date of completion of the search | Examiner |
|---|---|---|
| The Hague | 3 October 2024 | Bergmans, Koen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 3552

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2024

| Patent document cited in search report | | Publication date | Patent family member(s) | | Publication date |
|---|---|---|---|---|---|
| KR 102346374 | B1 | 03-01-2022 | CN | 107960099 A | 24-04-2018 |
| | | | CN | 111763486 A | 13-10-2020 |
| | | | EP | 3296374 A1 | 21-03-2018 |
| | | | EP | 3858934 A1 | 04-08-2021 |
| | | | HU | E054108 T2 | 30-08-2021 |
| | | | JP | 6698642 B2 | 27-05-2020 |
| | | | JP | 6953578 B2 | 27-10-2021 |
| | | | JP | 2020128543 A | 27-08-2020 |
| | | | JP | WO2016181880 A1 | 12-04-2018 |
| | | | KR | 20180004223 A | 10-01-2018 |
| | | | PL | 3296374 T3 | 16-08-2021 |
| | | | TW | 201706380 A | 16-02-2017 |
| | | | TW | 202037697 A | 16-10-2020 |
| | | | US | 2018154620 A1 | 07-06-2018 |
| | | | WO | 2016181880 A1 | 17-11-2016 |
| EP 3576942 | B1 | 31-05-2023 | AU | 2018216859 A1 | 08-08-2019 |
| | | | CN | 110234502 A | 13-09-2019 |
| | | | EP | 3576942 A1 | 11-12-2019 |
| | | | ES | 2952588 T3 | 02-11-2023 |
| | | | JP | 2020507920 A | 12-03-2020 |
| | | | KR | 20190112759 A | 07-10-2019 |
| | | | KR | 20220070046 A | 27-05-2022 |
| | | | KR | 20230169366 A | 15-12-2023 |
| | | | MY | 188669 A | 22-12-2021 |
| | | | TW | 201831324 A | 01-09-2018 |
| | | | US | 2022347980 A1 | 03-11-2022 |
| | | | WO | 2018141672 A1 | 09-08-2018 |
| EP 3848433 | A1 | 14-07-2021 | NONE | | |
| US 2023212379 | A1 | 06-07-2023 | CN | 115666938 A | 31-01-2023 |
| | | | EP | 3915782 A1 | 01-12-2021 |
| | | | US | 2023212379 A1 | 06-07-2023 |
| | | | WO | 2021239445 A1 | 02-12-2021 |

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- WO 2018141672 A
- WO 2019134904 A
- WO 2018171951 A1
- WO 2016066446 A1
- EP 2960256 B1
- EP 2960279 B1
- WO 2017071847 A1

## Non-patent literature cited in the description

- **HANS ZWEIFEL**. Plastic Additives Handbook. 2001, 871-873
- **LJILJANA JEREMIC** ; **ANDREAS ALBRECHT** ; **MARTINA SANDHOLZER** ; **MARKUS GAHLEIT-NER**. Rapid characterization of high-impact ethylene propylene copolymer composition by crystallization extraction separation: comparability to standard separation methods. *International Journal of Polymer Analysis and Characterization,*, 2020, vol. 25 (8), 581-596
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B., J.** *Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- **SINGH, G.** ; **KOTHARI, A.** ; **GUPTA, V.** *Polymer Testing*, 2009, vol. 28 (5), 475
- **RANDALL, J.** *Macromol. Sci., Rev. Macromol. Chem. Phys.*, 1989, vol. C29, 201
- *CHEMICAL ABSTRACTS*, 6683-19-8
- *CHEMICAL ABSTRACTS*, 31570-04-4